# EUROPEAN PATENT SPECIFICATION

(11) **EP 3 750 176 B1**
(45) Date of publication and mention of the grant of the patent: **30.03.2022**
(21) Application number: 18703984.7
(22) Date of filing: 07.02.2018
(51) Int. Cl.: H01G 4/35, H01G 4/40, H01G 2/10, H01G 4/224, H03H 5/00, H03H 7/00, H03H 1/00

(54) **HIGH-FREQUENCY FILTER ASSEMBLY**
HOCHFREQUENZ-FILTERANORDNUNG
ENSEMBLE FILTRE HAUTE FRÉQUENCE

(43) Date of publication of application: 16.12.2020
(73) Proprietor: Hitachi Energy Switzerland AG, 5400 Baden (CH)
(72) Inventor: JOHANSSON, Kenneth, 183 78 Täby (SE); BORJESSON, Jan-Åke, 771 94 Ludvika (SE); SANDBERG, Gustaf, 77160 Ludvika (SE)
(74) Representative: AWA Sweden AB
(86) International application number: PCT/EP2018/053024
(87) International publication number: WO 2019/154484

(56) References cited:
- EP-A1- 2 853 903
- WO-A1-2009/108544
- FR-A1- 2 234 643
- US-A1- 2004 032 307

## Description

### Technical field

The present disclosure relates to filtering in high-voltage systems. In particular, the present disclosure relates to a filter assembly for a high-voltage system.

### Background

High-voltage direct current (HVDC) converter stations are known to generate high-frequency disturbances that, if unmitigated, may propagate into for example connected switchyards and overhead lines. Such disturbances may give rise to electromagnetic fields which may cause e.g. unwanted interference with radio telecommunications in the vicinity of the converter station.

In an attempt to filter out such high-frequency disturbances, common converter stations are known to use one or more line reactors. However, for frequencies above a few MHz, physical limitations of these devices may reduce their usefulness as filters. There is therefore a need to provide an improved filter for use in high-voltage systems at high frequencies.

In document FR 2234643 A1 a capacitive filter element mounted in a coaxial casing is disclosed, intended for power transmission with up to 2 kV. Document WO 2009/108544 A1 discloses a capacitive voltage divider integrated in a ceramic bushing to be mounted on electrical distribution equipment in order to scavenge power for remote equipment.

### Summary

The present disclosure seeks to at least partially fulfill the above need. To achieve this, a filter assembly for a high-voltage system, a (wall) bushing for a high-voltage system and a gas-insulated switchgear (GIS) as defined in the independent claims are provided. Further embodiments are provided in the dependent claims.

According to a first aspect of the present disclosure, a filter assembly for a high-voltage system is provided. The filter may include a casing adapted to contain an electrically insulating medium. The electrically insulating medium may be introduced in the casing e.g. during manufacturing of the filter. It is also envisaged that the electrically insulating medium may not be introduced during manufacture of the filter, but added to the filter assembly afterwards, for example during installation of the filter.

The casing may include a main tubular section and a side tubular section. The side tubular section may be connected to the main tubular section and arranged to intersect the main tubular section, for example at a finite angle. An end of the side tubular section distant from the intersection with the main tubular section may be sealed. The sealed end of the side tubular section, and the tubular section itself, may include an electrically conducting material. An electrically conducting material may for example be a metal, although it is also envisaged that other materials other than metals may be used.

It is also envisaged that a return current from the capacitor may pass along the electrically conducting material of the side tubular section. The electrically conducting material may for example be a mesh of wire, a foil, or may form the wall(s) of the side tubular section. These embodiments would still provide a reduced stray inductance. If the electrically conducting material does not form the whole of the wall(s) of the side tubular section (or if the walls of the side tubular sections do not only include electrically conducting material), it may for example be envisaged that the electrically conducting material is distributed such that the return current may be distributed along a majority of the circumference/perimeter of the wall(s) of the side tubular section. Part or all of the casing may also include an electrically conducting material (such as e.g. a metal). Part or all of the casing may be grounded to earth.

The filter assembly may further include a conductor. The conductor may be arranged within the main tubular section. The conductor may extend along a longitudinal direction of the main tubular section. The conductor may be adapted to convey a power at high voltage. Herein, the term "conductor" includes an object designed to conduct electric current (such as a wire or bus bar). The conductor may for example include a metal such as for example copper or aluminum. It is also envisaged that other electrically conducting materials may be used.

The filter assembly may further include a capacitor. The capacitor may be a filter capacitor. The capacitor may be arranged within the side tubular section. The capacitor may be electrically connected between the conductor and (for example a wall of) the sealed end of the side tubular section. The capacitor may be arranged to shunt the conductor to ground via the side tubular section.

Herein, "high-voltage" may include voltages which are 100 kV or more. A "high-voltage system" may for example include a system configured to operate or handle one of an alternating current (AC) and direct current (DC), or a combination of both AC and DC.

The capacitor may provide a path to ground for high-frequency disturbances which may be present in the conductor. Consequently, the filter assembly may at least partly filter out such high-frequency disturbances and at least partially prevent them from propagating further along the conductor. By arranging the capacitor within the side tubular section, the overall insulation distance between the capacitor and nearby walls of the casing may be reduced. This may result in a reduced stray inductance of the capacitor. A reduced stray inductance may improve the functioning of the capacitor as a filter capacitor, and the filter assembly may provide an improved filtering compared with other filters in which the capacitor is not arranged within a (dedicated) side tubular section.

The present inventive concept of arranging a (shunt) capacitor in a side tubular section adapted to contain an electrically insulating medium provides the benefit of increasing the effective frequency range of the filter while still limiting the footprint, or space, required for installation of the filter assembly.

Herein, that the side tubular section intersects the main tubular section may mean that the main tubular section extends along a first longitudinal direction, and that the side tubular section is arranged to extend along a second longitudinal direction which intersects the first longitudinal direction. The intersection of the main tubular section and the side tubular section may for example be defined as the location at which two sections are connected together.

In some embodiments, the capacitor may be confined to the side tubular section. Phrased differently, all or a majority of the capacitor may be arranged within the side tubular section.

In some embodiments, the shape of an inner surface of the side tubular section may follow the shape of an outer surface of the capacitor. It may for example be envisaged that the shape of the inner surface of the side tubular section closely follows the shape of the outer surface of the capacitor. It may, for example, be envisaged that a volume of the capacitor occupies at least 10 % of an inner volume of the side tubular section.

In some embodiments, an inner surface of the side tubular section may be curved or cylindrical.

In some embodiments, the inner surface of the side tubular section may be conically tapered along the longitudinal direction of the side tubular section towards the sealed end of the side tubular section.

In some embodiments, the capacitor may be arranged concentrically with the side tubular section.

In some embodiments, the intersection (between the side tubular section and the main tubular section) may define a finite angle comprised in the interval from 20 to 90 degrees.

In some embodiments, the finite angle of intersection may be 90 degrees (i.e. the side tubular section may perpendicularly intersect the main tubular section). Herein, "perpendicular" is also envisaged to include a deviation from 90 degrees, such as for example 90 +/- 5 degrees.

In some embodiments, a distance between an outer surface of the capacitor and an inner surface of the side tubular section may be dimensioned so as to limit a stray inductance of the capacitor to below a stray inductance threshold, while preventing electrical breakdown. The stray inductance threshold may for example be a function of the assumed frequency spectrum of disturbances, electromagnetic field emission regulations and similar.

In some embodiments, the main tubular section and the side tubular section may be cylindrical. In some embodiments, the diameter of the main tubular section may be equal to the diameter of the side tubular section. Herein, "equal diameter" may include a deviation from exactly equal. For example, the diameter of the main tubular section may vary from 50% to 110% of the diameter of the side tubular section. It is appreciated that the diameter of the side tubular section may be the diameter of the side tubular section closest to the main tubular section.

In some embodiments, the main tubular section may comprise at least one flange for connecting the filter assembly to another component of the high-voltage system. In some embodiments, the main tubular section may for example comprise two flanges, with which the filter assembly may be connected to one or more other components of the high-voltage system. The filter assembly may, using the two flanges, for example be inserted serially with a transmission line or similar. The filter assembly may for example be inserted such that the conductor of the filter assembly forms part of a conductor of such a transmission line.

In some embodiments, the filter assembly may include at least one further side tubular section connected to the main tubular section and arranged to intersect the main tubular section. An end of the at least one further side tubular section distant from the intersection with the main tubular section may be sealed. The end of the at least one further side tubular section may include an electrically conducting material. The filter assembly may include at least one further capacitor, being arranged within the at least one further side tubular section, extending along a longitudinal direction of the at least one further side tubular section and being electrically connected between the conductor and the sealed end of the at least one further side tubular section.

In some embodiments, the filter assembly may include a plurality of side tubular sections connected to the main tubular section as described in any of the preceding embodiments. The filter assembly may include a plurality of capacitors, wherein each capacitor is arranged in a dedicated side tubular section in a similar (or the same) manner as described in the preceding embodiments.

Multiple capacitors each arranged in a dedicated side tubular section may provide an increased capacitance while limiting the stray inductance and maintaining an upper frequency limit of the filter.

In some embodiments, the filter assembly may be characterized by the absence of a (dedicated) line reactor arranged within the side tubular section.

Expressed differently, the present inventive concept of the filter assembly does not rely on the presence of a line reactor. It is therefore a line-reactor-less filter assembly. It is, however, envisaged to optionally also use one or more line reactors connected in for example series with the conductor.

In some embodiments, the electrically insulating medium may include an electrically insulating gas selected from the group consisting of: sulfur hexafluoride (SF₆); nitrogen (N), and carbon dioxide (CO₂). In some embodiments, the electrically insulating medium may include an electrically insulating liquid (such as oil). In some embodiments, the electrically insulating medium may include an electrically insulating solid (such as for example silicone). In some embodiments, the electrically insulating medium may be a vacuum.

Phrased differently, the electrically insulating medium may reduce a required insulation distance between an inner surface of the side tubular section and an outer surface of the capacitor, thereby reducing a stray inductance of the capacitor mounting.

According to a second aspect of the present disclosure, a bushing for a high-voltage system is provided. The bushing may for example be a wall bushing. The bushing may be filled, or be fillable, with an electrically insulating medium. The bushing may contain at least one filter assembly as defined in one or more embodiments of the present disclosure. As described earlier, the electrically insulating medium may be an electrically insulating gas, liquid, solid or a vacuum.

According to a third aspect of the present disclosure, a gas-insulated switchgear (GIS) is provided. The switchgear may contain at least one filter assembly and/or at least one bushing as defined in one or more embodiments of the present disclosure.

The present disclosure relates to all possible combinations of features recited in the claims. Objects and features described according to the first aspect may be combinable with, or replaced by, objects and features described according to the second aspect and/or the third aspect, and vice versa.

Further objects and advantages of the various embodiments of the present disclosure will be described below by means of exemplifying embodiments.

### Brief description of the drawings

Exemplifying embodiments will be described below with reference to the accompanying drawings, in which:
Figures 1a to 1d illustrate schematically various embodiments of a filter assembly;
Figures 2a and 2b are perspective views of various embodiments of a filter assembly, and
Figure 3 is a perspective view of a bushing according to an embodiment of the present disclosure.

In the drawings, like reference numerals will be used for like elements unless stated otherwise. Unless explicitly stated to the contrary, the drawings show only such elements that are necessary to illustrate the example embodiments, while other elements, in the interest of clarity, may be omitted or merely suggested. As illustrated in the figures, the sizes of elements and regions may be exaggerated for illustrative purposes and, thus, are provided to illustrate the general structures of the embodiments.

### Detailed description

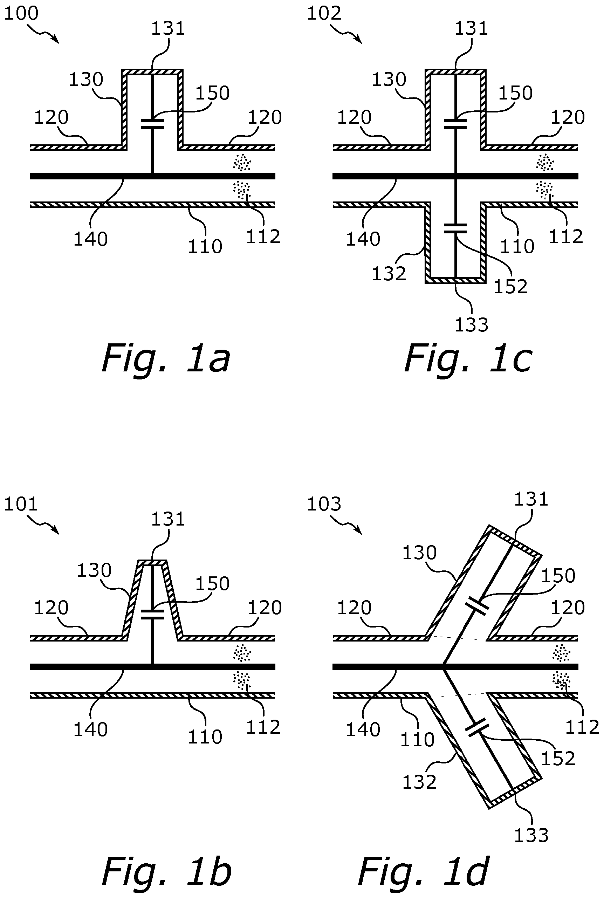

With reference to Figures 1a to 1d, various embodiments of a filter assembly according to the present disclosure are described in the following.

Figure 1a illustrates schematically a filter assembly 100 for a high-voltage system. The filter assembly 100 includes a casing 110 that is adapted to contain an electrically insulating medium in form of an electrically insulating gas 112. The casing 110 includes a main tubular section 120 and a side tubular section 130. The side tubular section 130 is arranged such that it may intersect the main tubular section 120 at a finite angle. In the filter assembly 110, the side tubular section 130 intersects the main tubular section 120 at an angle of 90 degrees (that is, the longitudinal extension of the side tubular section 130 is perpendicular to the longitudinal extension of the main tubular section 120). Distant from the intersection, the side tubular section 130 includes an end 131. The end 131 is sealed such that the electrically insulating as 112 does not escape from the casing 110 via the end 131. The end 131 includes a material which is electrically conductive. The end 131 may for example include, or be made of, metal such as steel, aluminum, or similar. Alternatively, the whole casing may be made of an electrically conductive material such as a metal.

The filter assembly 100 further includes a conductor 140. The conductor 140 is arranged in the casing 110, within the main tubular section 120 and extends along the longitudinal direction of the main tubular section 120. The conductor 140 is for example made of an electrically conductive material, for example a metal such as copper or aluminum, and the conductor 140 is adapted to convey electric power at high voltage.

The filter assembly 100 further includes a capacitor 150. The capacitor 150 is arranged within the side tubular section 130 such that it extends along the longitudinal direction of the side tubular section 130. The capacitor 150 electrically connects the conductor 140 with the sealed end 131 of the side tubular section 130. The sealed end 131, and also the casing 110, may be connected to ground. The capacitor 150 may act as a filtering capacitor, by providing a path from the conductor 140 to ground via the end 131 for high-frequency disturbances which may be present in the conductor. The filter assembly 100 may thereby at least partially filter out such disturbances and at least partially prevent them from propagating further along the conductor 140.

A capacitor may have a stray inductance. The stray inductance may be considered to be connected in series with the capacitor. At high frequencies, the capacitor itself may be considered to be a short circuit, while the stray inductance may be considered an open circuit. Consequently, the stray inductance may negatively affect the ability of the capacitor to shunt the conductor to ground for high frequencies.

As the inventors have realized, the stray inductance of the capacitor 150 may originate not only from within the capacitor itself (as introduced during e.g. construction and manufacture of the capacitor), but also between the capacitor and a nearby electrically conducting object. Phrased differently, the stray inductance of the capacitor may originate not only from the capacitor itself, but also from the mounting of the capacitor within for example a casing or enclosure. Herein, when referring to the "stray inductance of the capacitor", it is meant such a stray inductance originating from the capacitor mounting. As the inventors have further realized, this stray inductance (of the capacitor mounting) may grow with insulating distance (i.e. the distance required between the capacitor 150 and e.g. walls of the casing 110 in order to avoid electrical breakdown). By providing an electrically insulating medium (such as the gas 112) having a breakdown voltage higher than that of air, such as for example sulfur hexafluoride (SF₆) or e.g. nitrogen at an increased pressure, the insulation distance between the capacitor 150 and e.g. the surrounding casing 110 may be reduced, thereby reducing also the stray inductance. The breakdown voltage may also be increased by increasing the pressure of the electrically insulating gas. As the inventors have further realized, by arranging the capacitor 150 not within the main tubular section 120, but within a (dedicated) side tubular section 130, the distance, or distances, between the capacitor 150 and the walls of the casing 110 surrounding the conductor 150 may be further reduced. This may provide a further reduced stray inductance of the capacitor 150 and an improved functioning of the filter assembly 100 in terms of filtering high-frequency disturbances in the conductor 140.

Figure 1b illustrates schematically another embodiment of a filter assembly 101 for a high-voltage system. The filter assembly 101 is equal to the filter assembly 100 as illustrated in Figure 1a, except that an inner surface of the side tubular section 130 is conically tapered along the longitudinal direction of the side tubular section 130 towards the sealed end 131 of the side tubular section 130. The potential voltage difference between the capacitor 150 and the inside wall/surface of the side tubular section 130 may be largest where the capacitor 150 meets the conductor 140. When moving along the longitudinal direction of the side tubular section 130 towards the sealed end 131, the potential voltage difference may be reduced, and may reach a minimum at the sealed end 131. Consequently, the insulation distance required to avoid electric breakdown may also be reduced when moving along the longitudinal direction of the side tubular section 130 towards the sealed end 131. A tapered inner surface/wall of the side tubular section 130, as illustrated in the embodiment of the filter assembly 101 in Figure 1b, provides the benefit to further reduce the (average) distance or distances between the capacitor 150 and the surrounding parts of the casing 110 (namely the inside of the side tubular section 130). This may further reduce the stray inductance of the capacitor 150, and further improve the filtering ability of the filter assembly 101 for high-frequency disturbances in the conductor 140.

In the embodiments of the filter assemblies 100 and 101 as described herein, and in other embodiments of filter assemblies according to the present disclosure, it is envisaged that a distance (or distances) between an outer surface of the capacitor and an inner surface of the side tubular section is dimensioned so as to limit the stray inductance of the capacitor to below a stray inductance threshold, while (still) preventing electrical breakdown between the capacitor and the surrounding surfaces/walls of e.g. the side tubular section. The voltage required to cause electrical breakdown may depend on the magnitude of the voltage in the conductor, the type of electrically insulating gas (or more generally, the type of electrically insulating medium), the pressure of the electrically insulating gas (medium), and on other various factors. It is envisaged that the above mentioned distance (or distances) may be dimensioned taking these factors into account.

Figure 1c illustrates schematically a further embodiment of a filter assembly 102 for a high-voltage system. In addition to the components described with reference to the preceding embodiments illustrating filter assemblies 100 and 101 (see Figures 1a and 1b), the filter assembly 102 further includes a further side tubular section 132. The further (or additional) side tubular section 132 intersects the main tubular section 120 at a finite angle, and has a sealed end 133 distant from the intersection with the main tubular section 120. The end 133 may include an electrically conductive material such as a metal. A further capacitor 152 is arranged within the side tubular section 132. The capacitor 152 extends along the longitudinal direction of the side tubular section 132, and is arranged such that it also electrically connects the conductor 140 with ground via the end 133. Similar to e.g. the capacitor 150, the capacitor 152 provides an additional shunting of the conductor 140 to ground. Phrased differently, the capacitor 152 is connected in parallel with the capacitor 150, and provides an increased filter capacitance. The total shunt inductance may also be reduced by providing more than one shunt capacitor, as the stray inductances of the capacitors will then also be in parallel. As the capacitor 152 is also arranged within its own (dedicated) side tubular section 132, the stray inductance of the capacitor 152 may be lowered similarly to what has been described earlier herein for the capacitor 150.

Figure 1d illustrates schematically a further embodiment of a filter assembly 103 for a high-voltage. The components of the filter assembly 103 are equivalent (or similar) to those of the embodiment of e.g. the filter assembly 102, illustrated in Figure 1c, except that the two side tubular sections 130 and 132 intersect the main tubular section 120 at non-right angles (i.e. non-perpendicular). Phrase differently, the longitudinal directions of the side tubular sections 130 and 132 are slanted with respect to the longitudinal direction of the main tubular section 120. Slanting the side tubular sections 130 and 132 may for example provide a more compact filter assembly in terms of enclosure volume. This may for example provide an easier installation of the filter assembly 103 in e.g. areas having a confined space.

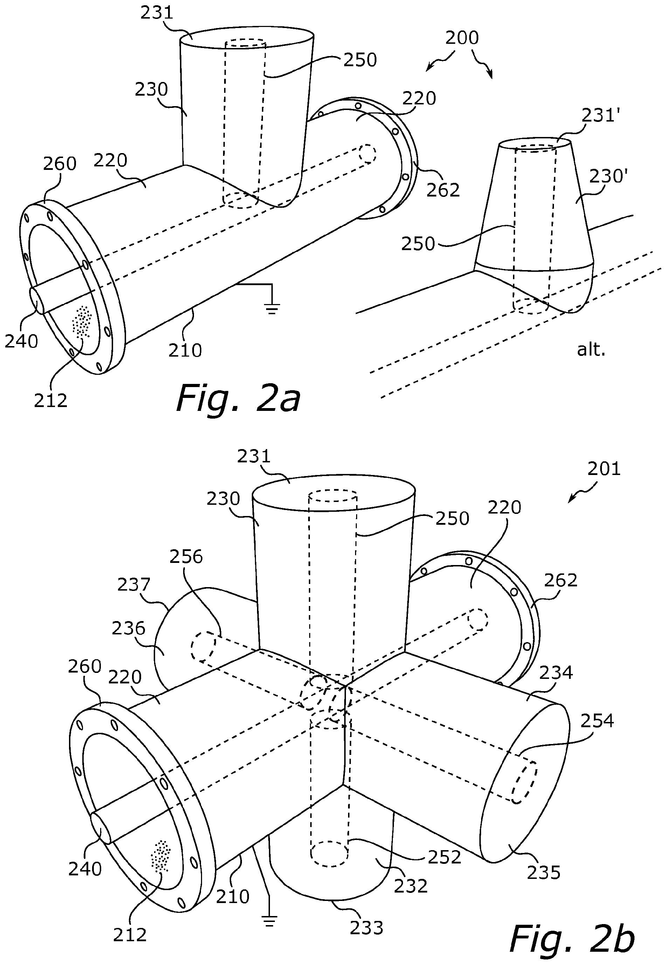

With reference to Figures 2a and 2b, further embodiments of filter assemblies according to the present disclosure will be described below.

The left side of Figure 2a is a perspective view of an embodiment of a filter assembly 200 for a high-voltage system. The filter assembly 200 includes a casing 210 which contains (or may contain) an electrically insulating medium in form of e.g. an electrically insulating gas 212. The casing 210 includes a main tubular section 220. The main tubular section 220 has a cylindrical shape, and includes flanges 260 and 262 with which the filter assembly 200 may be connected to other parts of the (gas-insulated) system. The filter assembly 200 includes a conductor 240 which is arranged within the main tubular section 220, and which extends along the longitudinal direction of the main tubular section 220. The conductor 240 is arranged concentrically with the main tubular section 220. To support the conductor 240, and to avoid that the conductor 240 comes into contact with the casing 210, one or more supporting structures (not shown in Figure 2a) may be arranged within the casing 210 and/or the main tubular section 220.

The casing 210 further includes a side tubular section 230. The side tubular section 230 intersects the main tubular section 220 at a finite angle. In the embodiment of the filter assembly 200 as illustrated in Figure 2a, the finite angle is a right angle, but it is envisaged also that other finite angles may be used, such as for example angles in the interval from 20 to 90 degrees. The side tubular section 230 has a cylindrical shape. At the end 231 of the cylindrical side tubular section 230 distant from the intersection with the main tubular section 220, the side tubular section 230 is sealed such that the electrically insulating gas 210 may not escape from the casing and the gas-insulated system via the side tubular section 230. The casing 210 is electrically conducting and connected to ground (as indicated by the ground symbol). As an example, the casing 210 (including the main tubular section 220 and the side tubular section 230 may include, or be made of an electrically conducting material such as e.g. metal such as steel or aluminum). It may also be envisaged to fabricate e.g. one or both of the main tubular section 220 and the side tubular section 230 of for example a composite material, with an added electrically conductive material in form of e.g. a metal foil or mesh, or an electrically conductive plastic. Other materials are also envisaged.

Although the main tubular section 220 and the side tubular section 230 have been described as having cylindrical shapes, it may also be envisaged to use shapes of other types, such as for example oval, triangular, square, rectangular, polygonal, or similar.

The filter assembly 200 includes a capacitor 250. The capacitor 250 is cylindrical and is arranged concentrically with the side tubular section 230, such that the capacitor 250 extends along the longitudinal direction of the side tubular section 230. The conductor 250 electrically connects the conductor 240 to ground via the end 231 of the side tubular section 230 and the casing 210. As both the capacitor 250 and the side tubular section 230 are cylindrical, a shape of an inner surface of the side tubular section 230 follows a shape of an outer surface of the capacitor 250. At least the inside diameter of the side tubular section 230 is dimensioned so as to minimize a stray inductance of the capacitor 250 while still preventing electrical breakdown between the capacitor 250 and e.g. a surrounding wall of the casing 210.

The capacitor 250 may for example be a capacitor adapted for use in gas-insulated switchgear (GIS) circuit breakers or similar, e.g. compliant to the IEC62146-1 standard.

It may for example be envisaged that the diameter of the main tubular section 220 and the diameter of the side tubular section 230 are the same, or approximately the same. For a high-voltage system (such as for example a 300 kV or 400 kV system), such a diameter may for example correspond to 400 to 500 mm, or similar. It is envisaged that one or both of the diameters of the main tubular section 220 and the side tubular section 230 may be adapted based on for example the voltage, electrically insulating medium, pressure, and similar.

The right side of Figure 2a is a perspective view of an alternative embodiment of a filter assembly 200 in which the side tubular section 230 has a shape which tapers in the direction towards the end 231. The capacitor 250 has a cylindrical outer shape, and the side tubular section 230 has a conical shape such that the distance between the inner surface of the side tubular section 230 and the capacitor 250 is reduced moving towards the end 231. As described earlier herein, this may allow for a further reduction of stray inductance of the capacitor 250.

Figure 2b is a perspective view of an embodiment of a filter assembly 201. The filter assembly 201 is similar to the filter assembly 200 described with reference to the embodiment illustrated in Figure 2a, except that the casing 210 includes a plurality of side tubular sections 230, 232, 234 and 236, and a plurality of capacitors 250, 252, 254 and 256. Each side tubular section 230, 232, 234 and 236 intersects the main tubular section 220 at a right angle, and each capacitor 250, 252, 254 and 256 is arranged within its own (dedicated) side tubular section 230, 232, 234 and 236. In the embodiment illustrated in Figure 2b, four side tubular sections and four capacitors are included. It is however also envisaged to include more or less side tubular sections and capacitors, such as for example 2, 3, 5, 6 or more of each. It may be envisaged that each capacitor has its own (dedicated) side tubular section, in order to minimize a stray inductance of each capacitor as described earlier herein. Although Figure 2b shows the side tubular sections/capacitors arranged around the periphery of the main tubular section, it may also be envisaged to place two or more capacitors along the length of the main tubular section. This may for example be an option if more capacitors may not be fitted around the periphery of the main tubular section at a certain distance along the main tubular section, or if placing multiple capacitors/side tubular sections around the periphery at the same distance along the main tubular section is not an option for other reasons.

It may, for example, be envisaged that the main tubular section includes more than one conductor. For example, for a multi-phase system, the main tubular section may include one conductor for each phase. Multiple capacitors/side tubular sections may then be placed along the length of the main tubular section and coupled in parallel in order to decrease the stray inductance. If multiple capacitors (for a single phase) are placed along the length of the main tubular section, it may be envisaged also that these capacitors are housed within a single side tubular section elongated in the longitudinal direction of the main tubular section and arranged to provide an outer casing to the capacitors, but dimensioned so as to minimize a stray inductance due to distance between the inner wall of such an elongated side tubular section and the capacitors.

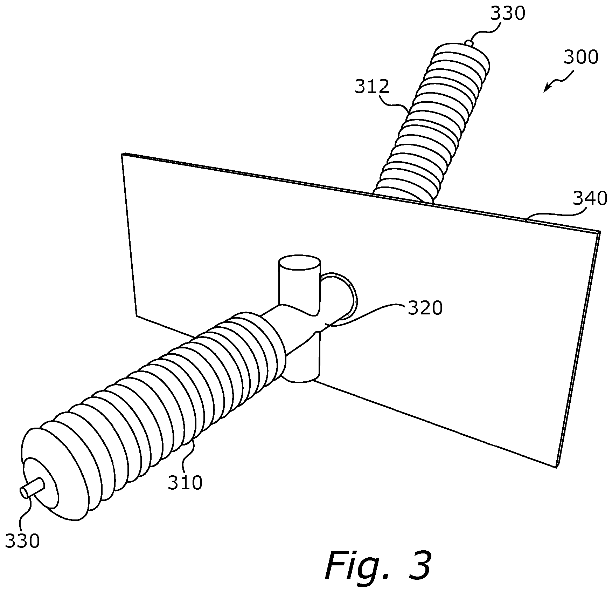

With reference to Figure 3, an embodiment of a (wall) bushing will be described below.

Figure 3 is a perspective view of a bushing 300. The bushing 300 includes isolating parts 310 and 312 (insulators), which are connected together via a filter assembly 320. The filter assembly 320 may for example be one of the filter assemblies 100, 101, 102, 103, 200 and 202 according to any one of the embodiments described herein. In the embodiment shown in Figure 3, the casing of the filter assembly 320 includes two side tubular sections. It is, of course, envisaged that more or fewer side tubular sections may be used, with a corresponding number of capacitors.

It will also be appreciated that, while it is herein described that one (or a single) capacitor is placed in a (dedicated) side tubular section, such a capacitor may include a plurality of capacitive elements (or sub-capacitors) connected together (for example in series) to form said capacitor.

The bushing 300 is a wall bushing, which is adapted to allow a conductor 330 to pass through a wall 340 while sufficiently isolating the conductor 330 (and the high-voltage/current therein) from the wall 340. The isolating parts may for example be ceramic insulators, or rubber insulators, or other types of insulators. By integrating the filter assembly 320 in the wall bushing 300, the filter may be positioned at a boundary of an electromagnetic screen provided by e.g. a building or container, or similar, to which the wall 340 belongs. With the arrangement of the capacitors in their respective (dedicated) side tubular sections, the stray inductances of the capacitors may be reduced and the filter assembly 320 may provide an improved performance in terms of filtering high-frequency (e.g. MHz) disturbances which would otherwise possibly escape from e.g. a converter station, or the like, through the bushing and on towards for example nearby switchyards or overhead lines.

It is envisaged that more than one filter assembly (such as the filter assembly 320) may be integrated in the bushing 300. For example, a second filter assembly may be connected in between the filter assembly 320 and the insulators 312, and positioned on the other side of the wall 340. It may also be envisaged to e.g. connect one or more filter assemblies in series for example between the isolator 310 and the filter assembly 320. The exact placement, and number, of filter assemblies may for example be adapted to filtering needs at e.g. the converter station, or the like, at which the bushing is located.

Although the filter assembly of the present inventive concept has been described herein as being integrated into a (wall) bushing, it is also envisaged that the filter assembly may be used in other high-voltage systems. Examples of such systems may for example include gas-insulated switchgear (GIS) or similar, wherein a network of various components are all provided within casings filled with an electrically insulating, often pressurized, gas.

As the inventors have realized, the positioning of filter capacitors in an environment containing an electrically insulating medium may reduce the isolation distance and, as a consequence, the stray inductance of the capacitors. Further on, as described herein, the positioning of capacitors in (dedicated) side tubular sections may further reduce the distance or distances between the capacitors and (grounded) surrounding walls/surfaces. This may further reduce the stray inductance, and further improve the filtering capability of the filter in terms of MHz disturbances.

The person skilled in the art realizes that the present disclosure is by no means limited to the embodiments described above. On the contrary, many modifications and variations are possible within the scope of the appended claims.

Although features and elements are described above in particular combinations, each feature or element may be used alone without the other features and elements or in various combinations with or without other features and elements.

In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A filter assembly for a high-voltage system, comprising:
a casing adapted to contain an electrically insulating medium, said casing including a main tubular section and a side tubular section connected to said main tubular section and arranged to intersect said main tubular section,
wherein an end of said side tubular section distant from the intersection with said main tubular section is sealed, said side tubular section including an electrically conducting material;
a conductor arranged within said main tubular section, said conductor extending along a longitudinal direction of said main tubular section and being adapted to convey a power at high voltage of 100 kV or more, and
a capacitor arranged within said side tubular section, said capacitor extending along a longitudinal direction of said side tubular section and being electrically connected between said conductor and the sealed end of said side tubular section.

2. The filter assembly of claim 1, wherein the capacitor is confined to the side tubular section.

3. The filter assembly of claim 1 or 2, wherein the shape of an inner surface of said side tubular section follows the shape of an outer surface of said capacitor.

4. The filter assembly of any one of the preceding claims, wherein an inner surface of said side tubular section is curved or cylindrical.

5. The filter assembly of any one of the preceding claims, wherein an inner surface of the side tubular section is conically tapered along the longitudinal direction of the side tubular section towards the sealed end of the side tubular section.

6. The filter assembly of any one of the preceding claims, wherein the capacitor is arranged concentrically with the side tubular section.

7. The filter assembly of any one of the preceding claims, wherein the intersection defines a finite angle in the interval from 20 to 90 degrees.

8. The filter assembly of any one of the preceding claims, wherein the side tubular section perpendicularly intersects the main tubular section.

9. The filter assembly of any one of the preceding claims, wherein a distance between an outer surface of the capacitor and an inner surface of the side tubular section is dimensioned so as to limit a stray inductance of the capacitor to below a stray inductance threshold while preventing electrical breakdown.

10. The filter assembly of any one of the preceding claims, wherein both of the main tubular section and the side tubular section are cylindrical and have a same diameter.

11. The filter assembly of any one of the preceding claims, wherein the main tubular section comprises two flanges for connecting the filter assembly to one or more other components of the high-voltage system.

12. The filter assembly of any one of the preceding claims, further comprising:
at least one further side tubular section connected to said main tubular section and arranged to intersect said main tubular section,
wherein an end of said at least one further side tubular section distant from the intersection with said main tubular section is sealed, said side tubular section including an electrically conducting material, and
at least one further capacitor being arranged within said at least one further side tubular section, extending along a longitudinal direction of said at least one further side tubular section and being electrically connected between the conductor and the sealed end of said at least one further side tubular section.

13. The filter assembly of any one of the preceding claims, **characterized by** the absence, within the side tubular section, of a dedicated line reactor.

14. The filter assembly of any one of the preceding claims, wherein the electrically insulating medium comprises an electrically insulated gas selected from the group consisting of: sulfur hexafluoride, SF₆; nitrogen, and carbon dioxide, CO₂.

15. The filter assembly of any one of the preceding claims, wherein the electrically insulating medium is an electrically insulating liquid, an electrically insulating solid or a vacuum.

16. A wall bushing for a high-voltage system, comprising at least one filter assembly as defined in any one of the preceding claims.

17. A gas-insulated switchgear, GIS, comprising at least one filter assembly as defined in any one of claims 1 to 15 and/or at least one wall bushing as defined in claim 16.

## Patentansprüche

1. Filteranordnung für ein Hochspannungssystem, umfassend:
ein Gehäuse, das zum Enthalten eines elektrisch isolierenden Mediums eingerichtet ist, wobei das Gehäuse einen Hauptrohrabschnitt und einen Seitenrohrabschnitt beinhaltet, der mit dem Hauptrohrabschnitt verbunden und zum Schneiden des Hauptrohrabschnitts angeordnet ist,
wobei ein Ende des Seitenrohrabschnitts, das vom Schnittpunkt mit dem Hauptrohrabschnitt entfernt ist, abgedichtet ist, wobei der Seitenrohrabschnitt ein elektrisch leitendes Material beinhaltet;
einen Leiter, der innerhalb des Hauptrohrabschnitts angeordnet ist, wobei sich der Leiter entlang einer Längsrichtung des Hauptrohrabschnitts erstreckt und dazu eingerichtet ist, einen Strom bei Hochspannung von 100 kV oder mehr zu übertragen, und
einen Kondensator, der innerhalb des Seitenrohrabschnitts angeordnet ist, wobei sich der Kondensator entlang einer Längsrichtung des Seitenrohrabschnitts erstreckt und elektrisch zwischen dem Leiter und dem abgedichteten Ende des Seitenrohrabschnitts verbunden ist.

2. Filteranordnung nach Anspruch 1, wobei der Kondensator auf den Seitenrohrabschnitt beschränkt ist.

3. Filteranordnung nach Anspruch 1 oder 2, wobei die Form einer Innenfläche des Seitenrohrabschnitts der Form einer Außenfläche des Kondensators folgt.

4. Filteranordnung nach einem der vorhergehenden Ansprüche, wobei eine Innenfläche des Seitenrohrabschnitts gekrümmt oder zylindrisch ist.

5. Filteranordnung nach einem der vorhergehenden Ansprüche, wobei eine Innenfläche des Seitenrohrabschnitts in der Längsrichtung des Seitenrohrabschnitts zum abgedichteten Ende des Seitenrohrabschnitts hin konisch verjüngt ist.

6. Filteranordnung nach einem der vorhergehenden Ansprüche, wobei der Kondensator konzentrisch zum Seitenrohrabschnitt angeordnet ist.

7. Filteranordnung nach einem der vorhergehenden Ansprüche, wobei der Schnittpunkt einen endlichen Winkel im Bereich von 20 bis 90 Grad definiert.

8. Filteranordnung nach einem der vorhergehenden Ansprüche, wobei der Seitenrohrabschnitt den Hauptrohrabschnitt senkrecht schneidet.

9. Filteranordnung nach einem der vorhergehenden Ansprüche, wobei ein Abstand zwischen einer Außenfläche des Kondensators und einer Innenfläche des Seitenrohrabschnitts so bemessen ist, dass eine Streuinduktivität des Kondensators unter einem Streuinduktivitätsschwellenwert liegt und zugleich elektrischer Durchschlag verhindert wird.

10. Filteranordnung nach einem der vorhergehenden Ansprüche, wobei sowohl der Hauptrohrabschnitt als auch der Seitenrohrabschnitt zylindrisch sind und den gleichen Durchmesser aufweisen.

11. Filteranordnung nach einem der vorhergehenden Ansprüche, wobei der Hauptrohrabschnitt zwei Flansche zum Verbinden der Filteranordnung mit einer oder mehreren anderen Komponenten des Hochspannungssystems umfasst.

12. Filteranordnung nach einem der vorhergehenden Ansprüche, ferner umfassend:
mindestens einen weiteren Seitenrohrabschnitt, der mit dem Hauptrohrabschnitt verbunden und zum Schneiden des Hauptrohrabschnitts angeordnet ist,
wobei ein Ende des mindestens einen weiteren Seitenrohrabschnitts, das vom Schnittpunkt mit dem Hauptrohrabschnitt entfernt ist, abgedichtet ist, wobei der Seitenrohrabschnitt ein elektrisch leitendes Material beinhaltet, und
mindestens einen weiteren Kondensator, der innerhalb des mindestens einen weiteren Seitenrohrabschnitts angeordnet ist, sich entlang einer Längsrichtung des mindestens einen weiteren Seitenrohrabschnitts erstreckt und elektrisch zwischen dem Leiter und dem abgedichteten Ende des mindestens einen weiteren Seitenrohrabschnitts verbunden ist.

13. Filteranordnung nach einem der vorhergehenden Ansprüche, **gekennzeichnet durch** die Abwesenheit eines speziellen Leitungsreaktors innerhalb des Seitenrohrabschnitts.

14. Filteranordnung nach einem der vorhergehenden Ansprüche, wobei das elektrisch isolierende Medium ein elektrisch isoliertes Gas umfasst, das aus der Gruppe ausgewählt ist bestehend aus: Schwefelhexafluorid, SF₆, Stickstoff und Kohlendioxid, CO₂.

15. Filteranordnung nach einem der vorhergehenden Ansprüche, wobei das elektrisch isolierende Medium eine elektrisch isolierende Flüssigkeit, ein elektrisch isolierender Feststoff oder ein Vakuum ist.

16. Wanddurchführung für ein Hochspannungssystem, umfassend mindestens eine Filteranordnung nach einem der vorhergehenden Ansprüche.

17. Gasisolierte Schaltanlage, GIS, umfassend mindestens eine Filteranordnung nach einem der Ansprüche 1 bis 15 und/oder mindestens eine Wanddurchführung nach Anspruch 16.

## Revendications

1. Ensemble filtre destiné à un système à haute tension, comportant :
une enveloppe prévue pour contenir un milieu électriquement isolant, ladite enveloppe comprenant une section tubulaire principale et une section tubulaire latérale raccordée à ladite section tubulaire principale et disposée pour croiser ladite section tubulaire principale,
une extrémité de ladite section tubulaire latérale distante de l'intersection avec ladite section tubulaire principale étant scellée, ladite section tubulaire latérale comprenant un matériau électriquement conducteur ;
un conducteur disposé à l'intérieur de ladite section tubulaire principale, ledit conducteur s'étendant suivant une direction longitudinale de ladite section tubulaire principale et étant prévu pour transmettre une puissance à une haute tension de 100 kV ou plus, et un condensateur disposé à l'intérieur de ladite section tubulaire latérale, ledit condensateur s'étendant suivant une direction longitudinale de ladite section tubulaire latérale et étant raccordé électriquement entre ledit conducteur et l'extrémité scellée de ladite section tubulaire latérale.

2. Ensemble filtre selon la revendication 1, le condensateur étant confiné à la section tubulaire latérale.

3. Ensemble filtre selon la revendication 1 ou 2, la forme d'une surface intérieure de ladite section tubulaire latérale suivant la forme d'une surface extérieure dudit condensateur.

4. Ensemble filtre selon l'une quelconque des revendications précédentes, une surface intérieure de ladite section tubulaire latérale étant incurvée ou cylindrique.

5. Ensemble filtre selon l'une quelconque des revendications précédentes, une surface intérieure de la section tubulaire latérale étant amincie de façon conique suivant la direction longitudinale de la section tubulaire latérale vers l'extrémité scellée de la section tubulaire latérale.

6. Ensemble filtre selon l'une quelconque des revendications précédentes, le condensateur étant disposé concentriquement avec la section tubulaire latérale.

7. Ensemble filtre selon l'une quelconque des revendications précédentes, l'intersection définissant un angle fini dans l'intervalle de 20 à 90 degrés.

8. Ensemble filtre selon l'une quelconque des revendications précédentes, la section tubulaire latérale croisant perpendiculairement la section tubulaire principale.

9. Ensemble filtre selon l'une quelconque des revendications précédentes, une distance entre une surface extérieure du condensateur et une surface intérieure de la section tubulaire latérale étant dimensionné de façon à limiter une inductance parasite du condensateur en-dessous d'un seuil d'inductance parasite tout en prévenant un claquage électrique.

10. Ensemble filtre selon l'une quelconque des revendications précédentes, la section tubulaire principale et la section tubulaire latérale étant toutes deux cylindriques et présentant un même diamètre.

11. Ensemble filtre selon l'une quelconque des revendications précédentes, la section tubulaire principale comportant deux brides servant à raccorder l'ensemble filtre à un ou plusieurs autres composants du système à haute tension.

12. Ensemble filtre selon l'une quelconque des revendications précédentes, comportant en outre :
au moins une section tubulaire latérale supplémentaire raccordée à ladite section tubulaire principale et disposée pour croiser ladite section tubulaire principale,
une extrémité de ladite ou desdites sections tubulaires latérales supplémentaires distante de l'intersection avec ladite section tubulaire principale étant scellée, ladite section tubulaire latérale comprenant un matériau électriquement conducteur, et
au moins un condensateur supplémentaire étant disposé à l'intérieur de ladite ou desdites sections tubulaires latérales supplémentaires, s'étendant suivant une direction longitudinale de ladite ou desdites sections tubulaires latérales supplémentaires et étant raccordé électriquement entre le conducteur et l'extrémité scellée de ladite ou desdites sections tubulaires latérales supplémentaires.

13. Ensemble filtre selon l'une quelconque des revendications précédentes, **caractérisé par** l'absence, à l'intérieur de la section tubulaire latérale, d'une réactance de ligne dédiée.

14. Ensemble filtre selon l'une quelconque des revendications précédentes, le milieu électriquement isolant comportant un gaz électriquement isolant choisi dans le groupe constitué : de l'hexafluorure de soufre, SF₆ ; de l'azote, et du dioxyde de carbone, CO₂.

15. Ensemble filtre selon l'une quelconque des revendications précédentes, le milieu électriquement isolant étant un liquide électriquement isolant, un solide électriquement isolant ou un vide.

16. Traversée de paroi destinée à un système à haute tension, comportant au moins un ensemble filtre tel que défini dans l'une quelconque des revendications précédentes.

17. Appareillage de connexion à isolation gazeuse, GIS, comportant au moins un ensemble filtre tel que défini dans l'une quelconque des revendications 1 à 15 et/ou au moins une traversée de paroi telle que définie dans la revendication 16.
